# EUROPÄISCHE PATENTSCHRIFT

(11) **EP 0 782 077 B1**
(45) Veröffentlichungstag und Bekanntmachung des Hinweises auf die Patenterteilung: **20.08.2003**
(21) Anmeldenummer: 96119487.5
(22) Anmeldetag: 04.12.1996
(51) Int. Cl.: G06F 12/06

(54) **Verfahren und Anordnung zum Konvertieren von Speicheradressen in Speicheransteuersignale**
Method and arrangement for converting memory addresses into memory control signals
Procédé et arrangement pour convertir des adresses de mémoire en signaux de commande de mémoire

(30) Priorität: 29.12.1995 DE 19549061
(43) Veröffentlichungstag der Anmeldung: 02.07.1997
(73) Patentinhaber: SIEMENS AKTIENGESELLSCHAFT, 80333 München (DE)
(72) Erfinder: Brandt, Ulrich, 81673 München (DE); Kropsch, Norbert, 80637 München (DE)

(56) Entgegenhaltungen:
- EP-A- 0 285 986
- EP-A- 0 289 899
- IBM TECHNICAL DISCLOSURE BULLETIN, Bd. 31, Nr. 12, 1.Mai 1989, Seiten 213-216, XP000110911 "DYNAMIC SELF-CONFIGURATION FOR MEMEORY CARDS ARRANGEMENT"

## Beschreibung

In prozessorgesteuerten Einrichtungen ist für die Speicherung von Programmen und Daten ein Speicher - üblicherweise dynamische oder statische RAM's (Random Access Memory) - vorgesehen. Um Daten in Speicherbereiche des Speichers zu schreiben oder Daten aus den einzelnen Speicherbereichen zu lesen, generiert der Prozessor eine Speicherbereichsadresse und übergibt diese an eine Speicheransteuerung - in der Fachwelt als SRAM- oder DRAM-Controller bekannt. Die Speicheransteuerung leitet diese Speicherbereichsadresse über Adreßleitungen an Adreßeingänge des Speichers weiter. Die Speicherbereichsadressen repräsentieren meist eine Dualzahl, wobei der kleinste adressierbare Speicherbereich üblicherweise ein oder mehrere Byte umfaßt.

Der Speicher ist durch mehrere Einsetzbereiche gebildet, in die jeweils zumindest ein Speichermodul - üblicherweise ein integrierter Speicherbaustein - eingesetzt werden kann. Die durch Steckeinrichtungen realisierten Einsetzbereiche sind häufig derart ausgestaltet, daß Speichermodule bzw. Speicherbausteine mit unterschiedlichen Speicherkapazitäten eingesetzt werden können - beispielsweise Speichermodule mit 1 oder 4 Kbyte bzw. Mbyte. Durch eine unterschiedliche Bestükkung der Einsetzbereiche ist folglich eine optimale Anpassung der Speicherkapazität des Speichers an die jeweilige Anwendung möglich. Dies bedeutet, daß die Speichermodule in Abhängigkeit von ihrer Speicherkapazität in die adressen-konformen Einsetzbereiche eingesetzt werden müssen, um eine fehlerfreie Speicheradressierung zu gewährleisten. Eine Fehlbestückung hinsichtlich der Speicherkapazität und der Einsetzbereiche führt zur erheblichen Störungen des Prozessorsystems bzw. zu dessen Ausfall.

Aus der Druckschrift EP 289899 A2 ist ein Speicheradressierungssystem für einen Speicher, in dem Speichermodule unterschiedlicher Speicherkapazität einsetzbär sind, bekannt. Um die unterschiedlichen Speichermodule korrekt zu adressieren, ist eine Adressverschiebestufe vorgesehen, die Adressbits abhängig von der Speicherkapazität des größten eingesetzten Speichermoduls bitweise verschiebt.

Ein weiteres Speicheradressierungsverfahren zur Ansteuerung von Speichermodulen zweier unterschiedlicher Speicherkapazitäten ist aus der Druckschrift "IBM Technical Disclosure Bulletin", Bd. 31, Nr. 12, Mai 1989, Seiten 213-216, Dynamic Self-configuration for Memory Arrangement' bekannt. Hierbei wird für jeden Einsetzbereich eines Speichermoduls angezeigt, ob ein Speichermodul tatsächlich eingesetzt ist, und welche der beiden möglichen Speicherkapazitäten es aufweist. Abhängig davon wird den größeren Speichermodulen einerseits und den kleineren Speichermodulen andererseits jeweils ein zusammenhängender Adressraum zugeordnet, wobei der Adressraum der kleineren Speichermodule an der oberen Grenze des Adressraums der größeren Speichermodule angrenzt. Aufgrund der festen Verschaltung der Adresslogik ist dieses Speicheradressierungsverfahren jedoch nur wenig flexibel und schwer auf abweichende Speicherkonfigurationen übertragbar.

Weiterhin ist aus dem Dokument EP 285986 A2 ein Verfahren und eine Anordnung zur Adressierung eines flexibel bestückbaren Speichers bekannt, wobei prozessorgenerierte Speicheradressen in speicherkonfigurationsgerechte Speicheransteuersignale umgesetzt werden. Im Rahmen dieser Umsetzung werden höherwertige Adressbits einer Speicheradresse auf sequentiell geordnete Segmentleitungen umgesetzt, die zu einer Segmentauswahllogik führen. Durch die Segmentauswahllogik werden die Segmentleitungen abhängig von Kapazitätssignalen, die die Kapazität eingesetzter Speichermodule angeben, einer jeweiligen Speicherbank zugeordnet. Die Anzahl der notwendigen Segmentlei tungen ist dabei gegeben durch das Verhältnis des Gesamtadressraums des Speichers zum Adressraum des Speichermoduls mit der geringstmöglichen Speicherkapazität. Damit steigt jedoch in Speichern, die ein Einsetzen vieler unterschiedlicher Speichermodule erlauben sollen, die Anzahl der erforderlichen Segmentleitungen - und damit der für einen Umsetzbaustein erforderliche Hardwareaufwand - erheblich an.

Die der Erfindung zugrundeliegende Aufgabe besteht darin, ausgehend von der durch den Prozessor generierten Speicherbereichsadresse unter Berücksichtigung einer flexiblen Konfiguration des Speicher eine Speicherkonfigurations-gerechte Adressierung des Speichers zu gewährleisten. Die Aufgabe wird durch die Merkmale der Ansprüche 1 und 6 gelöst.

Der wesentliche Aspekt des erfindungsgemäßen Verfahren ist in der Bildung von Konvertierungsinformationen zu sehen, mit deren Hilfe die vom Prozessor generierten Speicherbereichsadressen in auf die aktuelle Speicherkonfiguration abgestimmte Speicheransteuersignale konvertiert werden. Hierbei werden jeweils jedem eingesetzten Speichermodul zugeordnete und eine die Speicherkapazität der jeweiligen Speichermodule anzeigende Kapazitätsinformationen und das Vorhandensein von eingesetzten Speichermodulen anzeigende Konfigurationsinformationen aller Einsetzbereiche erfaßt und aus den erfaßten Kapazitätsinformationen und den Konfigurationsinformationen in Abhängigkeit von den erfaßten Konfigurationsinformation den Adreßraum anzeigende logische Kapazitätsinformationen und die virtuelle Konfiguration des Speichers anzeigende, logische Konfigurationsinformationen abgeleitet. Die logischen Kapazitäts-informationen repräsentieren zuammen mit den Konfigurationsinformationen die Konvertierungsinformationen.

Bei einer m-stelligen, binären Speicherbereichsadresse sind n höchstwertige Stellen für die Konfiguration von 2ⁿ Einsetzbereichen vorgesehen, wobei in jeden Einsetzbereich Speichermodule mit einer Gesamtspeicherkapazität von 2^{m-n} adressierbaren Speicherbereichen einsetzbar sind und für jeden Einsetzbereich wird eine Kapazitäts- und eine Konfigurationsinformation erfaßt - Anspruch 2. Durch diese Aufteilung werden Speichermodule mit 2^{x} - Seicherkapazitätsabstufungen berücksichtigt. Andere Speicherkapazitätsabstufungen sind möglich, führen jedoch zu Adressierungseinschränkungen und zu erhöhten Aufwendungen für eine Realisierung des erfindungsgemäßen Verfahren.

Gemäß einer vorteilhaften Weiterbildung des erfindungsgemäßen Verfahrens sind Speichermodule mit zwei unterschiedlichen Speicherkapazitäten einsetzbar, wobei die größere Speicherkapazität 2^{m-n} adressierbare Speicherbereiche und die kleinere Speicherkapazität 2^{m-n-k} (k,l,m,n = 1,2..) adressierbare Speicherbereiche umfaßt. Die Speichermodule mit der größeren Speicherkapazität werden, beginnend mit dem Einsetzbereich mit den kleinsten, zugeordneten Speicherbereichsadressen, sukzessive in die Einsetzbereiche mit den nächst höherwertigeren zugeordneten Speicherbereichsadressen eingesetzt. Die erfaßten Kapazitätsinformationen sind durch eine die kleine oder große Speicherkapazität anzeigende, binäre Kapazitätsinformation und die Konfigurationsinformation durch eine das Vorhandensein oder nicht Vorhandensein eines eingesetzten Speichermoduls anzeigende, binäre Konfigurationsinformation repräsentiert - Anspruch 3. Durch diese Einschränkung, die zwar Fehlbestückungen erlaubt, wird jedoch die Speicherkapazität der fehlbestückten Speichermodule reduziert. Des weiteren kann durch die Einschränkung eine Konvertierungseinrichtung noch einfacher, d.h. wirtschaftlicher realisiert werden.

Ein weiterer erfindungswesentlicher Aspekt ist in der Benutzung der Konvertierungsinformationen zum Konvertieren von durch eine prozessorgesteuerte Einrichtung gebildeten Speicherbereichsadressen in auf eine Struktur und Speicherkapazität eines Speichers abgestimmte Speicheransteuersignale zu sehen, wobei der Speicher durch einheitliche und/oder unterschiedliche Speicherkapazitäten aufweisende Speichermodule gebildet ist, die jeweils in einen physikalischen Einseztbereich eingesetzt sind. Hierzu wird aus n+k, die Konfiguration des Speichers betreffende Stellen einer aktuell vorliegenden m-stelligen Speicherbereichsadresse mit Hilfe von aus die Speicherkapazität anzeigenden Kapazitätsinformationen abgeleiteten logischen Kapazitätsinformationen und aus von die virtuelle Speicherkonfiguration anzeigenden Konfigurationsinformationen abgeleiteten logischen Konfigurationsinformationen ein einsetzbereichsbezogenes logisches Speicheransteuersignal abgeleitet, und mit Hilfe der Konfigurationsinformationen wird aus dem einsetzbereichsbezogenen logischen Speicheransteuersignal für den betroffenen Einsetzbereich ein physikalisches Speicheransteuersignal abgeleitet.

Weitere vorteilhafte Ausgestaltungen der erfindungsgemäßen Verfahrens sowohl zum Bilden von Konvertierungsinformationen als auch zum Konvertieren der Speicherbereichsadresse in Speicheransteuersigale sowie Anordnungen zur Durchführung der erfindungsgemäßen Verfahren sind den weiteren Ansprüchen zu entnehmen.

Die Erfindung wird im folgenden anhand von zeichnerischen Darstellungen näher erläutert. Dabei zeigen
- FIG 1: eine Konfiguration eines Speichers mit der erfindungsgemäßen Konvertierungseinrichtung,
- FIG 2: ein Blockschaltbild der Konvertierungseinrichtung,
- FIG 3: die erste Verschiebestufe zur Bildung der logischen Kapazitäts- und Konfigurationsinformationen,
- FIG 4: eine Kapazitätskorrekturstufe zum Bilden von Korrekturinformationen,
- FIG 5: in einem Blockschaltbild eine Modulauswahleinheit
- FIG 6: zum Bilden von logischen Speicheransteuersignalen und
- FIG 7: eine zweite Verschiebestufe zur Bildung von physikalischen Speicheransteuersignalen.

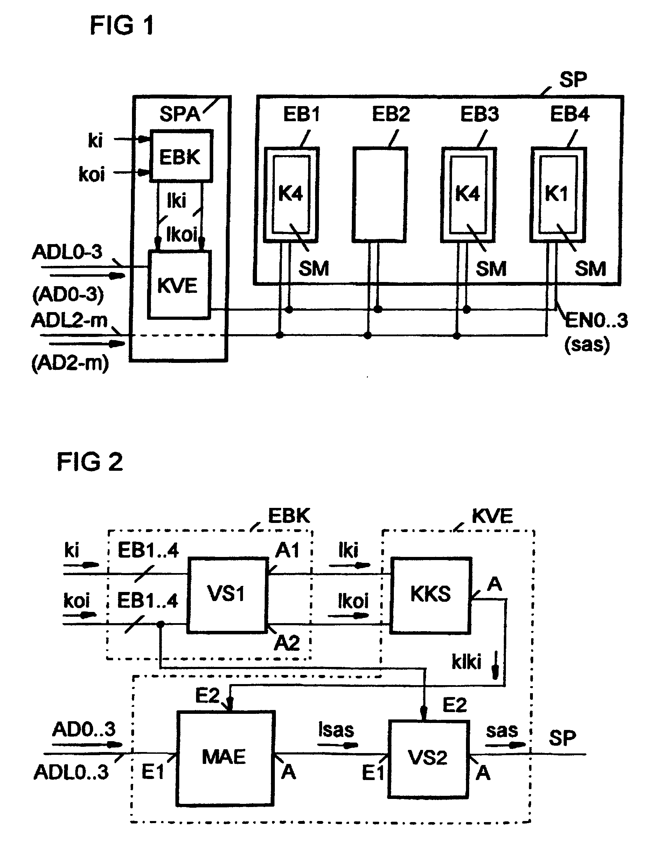

FIG 1 zeigt eine für das Ausführungsbeispiel angenommene Konfiguration eines Speichers SP, der durch vier Einsetzbereiche EB1..4 gebildet ist, d.h. n = 2. In diese meist durch Steckplätze realisierte Einsetzbereiche EB1..4 sind jeweils Speichermodule SM mit einer vorgegebenen Speicherkapazität K1 oder der vierfachen vorgegebenen Speicherkapazität K4 einsetzbar bzw. steckbar - d.h. k = 2 -, wobei die vorgegebene Speicherkapazität K1 beispielsweise 1 MByte beträgt. Von den für eine Adressierung erforderlichen 24 - d.h. m = 24 - Adreßleitungen ADL sind n+k, im Ausführungsbeispiel vier höchstwertige Adreßleitungen AD0..3 an eine Konvertierungseinrichtung KVE geführt. Die verbleibenden, ebenfalls parallel an die Einsetzbereiche EB1..4 geführten n-m Adreßleitungen ADL2..m werden direkt an den Speicher SP geführt. Die Konvertierungseinrichtung KVE ist über zwei eine logische Kapazitäts- und eine logische Konfigurationsinformation lki, lkoi übermittelnde Leiungen mit einer Einrichtung EBK zum Bilden von Konvertierungsinformationen verbunden, in der zugeführte Kapazitäts- und Konfigurationsinformationen ki,koi erfaßt werden. Die Konvertierungseinrichtung KVE bzw. die Einrichtung EBK zum Bilden von Konfigurationsinformationen stellen jeweils eine separate Einheit oder eine Subeinheit einer Speicheransteuerung SPA dar, deren weitere, nicht dargestellte Funktionen den bekannten DRAM- bzw. SRAM-Controllern entsprechen. Für das Ausführungsbeispiel sei des weiteren bestimmt, daß in die Einsetzbereiche EB1..4, beginnend mit dem ersten Einsetzbereich EB1, zuerst die Speichermodule SM mit der größeren und anschließend mit der kleineren Speicherkapazität K4,1 eingesetzt werden sollen. Die aktuelle, auf einen Anwendungsfall abgestimmte Konfiguration ist beim Ausführungsbeispiel durch ein im ersten und dritten Einsetzbereich EB1,3 eingesetztes Speichermodul SM mit großer Speicherkapazität K4 und durch ein in den vierten Einsetzbereich EB4 eingesetztes Speichermodul SM mit kleiner Speicherkapazität K1 bestimmt, wobei in den zweiten Einsetzbereich EB2 kein Speichermodul SM eingesetzt ist.

FIG 2 zeigt die Einrichtung EBK zum Bilden von Konvertierungsinformationen mit einer ersten Verschiebestufe VS1, an die die Speicherkapazität K1,4 anzeigende Kapazitätsinformationen ki und das Vorhandensein von in die jeweiligen Einsetzbereiche EB1..4 eingesetzten Speichermodule (SM) anzeigende Konfigurationsinformationen (koi) geführt werden. Über einen ersten Ausgang A1 der ersten Verschiebestufte VS1 werden ermittelte logische Kapazitätsinformationen lki und über einen zweiten Ausgang A2 logische Konfigurationsinformationen lkoi an eine in einer Konvertierungseinrichtung KVE angeordneten Kapazitätskorrekturstufe KKS übermittelt. Über einen Ausgang A der Kapazitätskorrekturstufe KKS gelangen die korrigierten Kapazitätsinformationen klki an einen zweiten Eingang E2 einer ebenfalls in der Konvertierungseinrichtung KVE angeordneten Modulauswahleinheit MAE, an deren ersten Eingang E1 diejenigen n Adreßleitungen AD0,1 geführt sind, durch die die in Einsetzbereiche EB1..4 eingesetzte Speichermodule SM adressiert werden. Beim Ausführungsbeispiel sind die vier höchstwertigen Adreßleitungen ADL0..3 an die Modulauswahleinheit MAE geführt. Über einen Ausgang A der Modulauswahleinheit MAE gelangen die in ihr gebildeten logischen Speicheransteuersignale lsas an einen ersten Eingang E1 einer ebenfalls in der Konvertierungseinrichtung KVE angeordneten, zweiten Verschiebestufe VS2, an deren Ausgang A das Speicheransteuersignal sas vorliegt, durch die der jeweilige betroffene Einsetzbereich EB1..4 in Abhängigkeit von der aktuell vorliegenden Speicherbereichsadresse AD0..m adressiert ist.

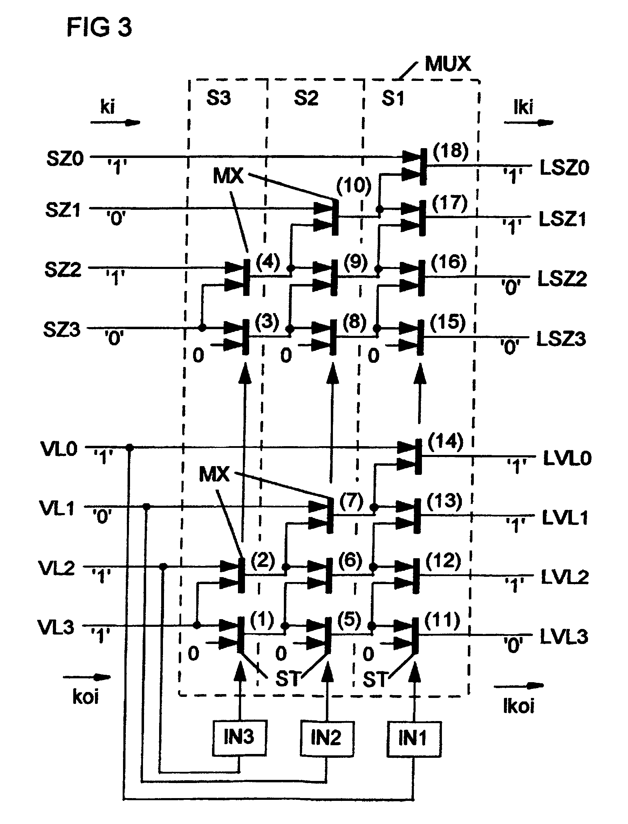

FIG 3 zeigt in einem Blockschaltbild die erste Verschiebestufe VS1, wobei vier jeweils die kleine oder große Speicherkapazität K1,4 je Einsetzbereich EB1..4 anzeigende Kapazitätsinformationen ki über vier Kapazitätsleitungen SZ0..3 und vier das Vorhandensein von Speichermodulen SM in den Einsetzbereichen EB1..4 anzeigende Konfigurationsinformationen koi über vier Vorhandenseinleitungen VL0..3 an einen Multiplexer MUX geführt werden. Der Multiplexer MUX weist drei Schiebestufen S1..3 auf, wobei die dritte Schiebestufe S3 zweimal zwei (1..4), die zweite Schiebestufe S2 jeweils drei (5..10) und erste Schiebestufe S1 jeweils vier (11..18) Multiplexelemente MX enthält. Jeweils die Hälfe der Multiplexelemente MX ist den Kapazitätsleitungen SZ0..3 und die andere Hälfte den Vorhandenseinleitungen VL0..3 zugeordnet. Ein Multiplexelement MX weist zwei Eingänge - durch Pfeile angedeutet -, einen Ausgang und einen Steuereingang - durch die Bezeichnung ST angedeutet - auf, wobei bei Anlegen einer binären 0-Information an den Steuereingang ST die am oberen Eingang anliegenden und bei Anlegen einer binären 1-Information an den Steuereingang ST die am unteren Eingang anliegenden Signale an den Ausgang geschaltet werden.

In der dritten Schiebestufe S3 ist die vierte Vorhandenseinleitung VL3 an jeweils einen Eigang eines ersten Multiplexelementes MX (1), dessen zweiter Bingang mit O-Potential verbunden ist, und an einen Eingang eines zweiten Multiplexelementes MX(2) geführt, dessen zweiter Eingang mit der dritten Vorhandenseinleitung VL2 verbunden ist. In der dritten Schiebestufe S3 ist des weiteren die vierte Kapazitätsleitung SZ3 an ein drittes Multiplexelement MX(3), dessen zweiter Eingang mit 0-Potential verbunden ist, und an ein viertes Multiplexelement MX(4) geschaltet, dessen zweiter Eingang mit der dritten Kapazitätsleitung SZ2 verbunden ist. In der zweiten Schiebestufe S2 ist der Ausgang des ersten Multiplexelementes MX(1) mit dem oberen Eingang des fünften und dem unteren Eingang des sechsten Multiplexelementes MX(5,6) verbunden, wobei an den unteren Eingang des fünften Multiplexelementes MX(5) 0-Potential geschaltet ist. Der Ausgang des zweiten Multiplexelementes MX(2) ist an den oberen Eingang des sechsten und an den unteren Eingang des siebten Multiplexelementes MX(6,7) geschaltet, dessen oberer Eingang mit der zweiten Vorhandenseinleitung VL1 verbunden ist. Die Eingänge des achten bis zehnten Multiplexelementes MX(8..10) sind mit den Ausgängen des dritten und vierten Multiplexelementes MX(3,4) in gleicher Weise wie vorhergehend beschrieben verbunden.

In der dritten Schiebestufe S3 ist der Ausgang des fünften Multiplexelementes MX(5) mit dem oberen Eingang des elften und dem unteren Eingang des zwölften Multiplexelementes MX(11,12) verbunden, wobei der untere Eingang des elften Multiplexelementes MX(11) auf 0-Potential geschaltet ist. Der Ausgang des sechsten Multiplexelementes MX(6) ist auf den oberen Eingang des zwölften und den unteren Eingang des dreizehnten Multiplexelementes MX(12,13) und der Ausgang des siebten Multiplexelementes MX(7) ist auf den oberen Eingang des dreizehnten und den unteren Eingang des vierzehnten Multiplexelementes MX(13,14) geführt, wobei der obere Eingang des vierzehnten Multiplexelementes MX(14) mit der ersten Vorhandenseinleitung VL0 verbunden ist. In analoger Weise sind die Ausgänge der achten bis zehnten Multiplexelemente MX(8..10) und die erste Kapazitätsleitung SZ0 mit den oberen und unteren Eingängen der fünfzehnten bis achtzehnten Multiplexelemente MX(15..18) verbunden.

An die erste Vorhandenseinleitung VL0 ist ein Inverter IN1 geschaltet, dessen Ausgang an alle Steuereingänge ST der in der ersten Schiebestufe S1 angeordneten Multiplexelemente MX(11..18) geführt ist. Analog hierzu sind die Steuereingänge ST der zweiten Schiebestufe S2 über einen zweiten Inverter IN2 mit der zweiten Vorhandenseinleitung VL1 und die Steuereingänge ST der dritten Schiebestufe S3 über einen dritten Inverter IN3 mit der dritten Vorhandenseinleitung VL2 verbunden.

Die Ausgänge der vierzehnten bis elften Multiplexelemente MX(14..11) repräsentieren die logischen Vorhandenseinleitungen LVL0..3, an denen die logischen Konfigurationsinformationen lkoi verfügbar sind. Die Ausgänge der achtzehnten bis fünfzehnten Multiplexelemente MX(18..15) repräsentieren die logischen Kapazitätsleitungen LSZ0..3, an denen die logischen Kapazitätsinformationen lki vorliegen.

Unter der Voraussetzung, daß bei der Kapazitätsinformation ki eine binäre 1-Information eine Speicherkapazität von 4 MByte und eine 0-Information eine Speicherkapazität von 1 MByte repräsentiert, liegt beim Ausführungsbeispiel an der ersten Kapazitätsleitung SZ0 eine 1-Information, an der zweiten Kapazitätsleitung SZ1 eine 0-Information, an der dritten Kapazitätsleitung SZ2 eine 1-Information und an der vierten Kapazitätsleitung SZ4 eine 0-Information an. Unter der weiteren Voraussetzung, daß bei der Konfigurationsinformation koi eine 0-Information das Fehlen und eine 1-Information das Vorhandensein eines eingesetzten Speichermoduls SM anzeigt, liegt bezogen auf das Ausführungsbeispiel an der ersten Vorhandenseinleitung VL0 eine binäre 1-Information, an der zweiten Vorhandenseinleitung VL1 eine binäre 0-Information, an der dritten Vorhandenseinleitung VL2 eine binäre 1-Information und an der vierten Vorhandenseinleitung VL3 eine binäre 1-Information an. Dies bedeutet, daß in der zweiten Schiebestufe S2 eine Verschiebung der anliegenden Information in Richtung Adressen-niederwertiger Richtung stattfindet, da in den zweiten Einsetzbereich EB2 kein Speichermodul SM eingesetzt bzw. gesteckt ist.

An den logischen Kapazitätsleitungen LSZ(0..3) liegt folglich eine durch binäre Informationen gebildete logische Kapazitätsinformation lki vor - eine binäre 1100-Bitkombination. An den logischen Vorhandenseinleitungen LVL0..3 liegt die logische Konfigurationsinformation lkoi ebenfalls in binärer Form vor - eine binäre 1110-Bitkombination.

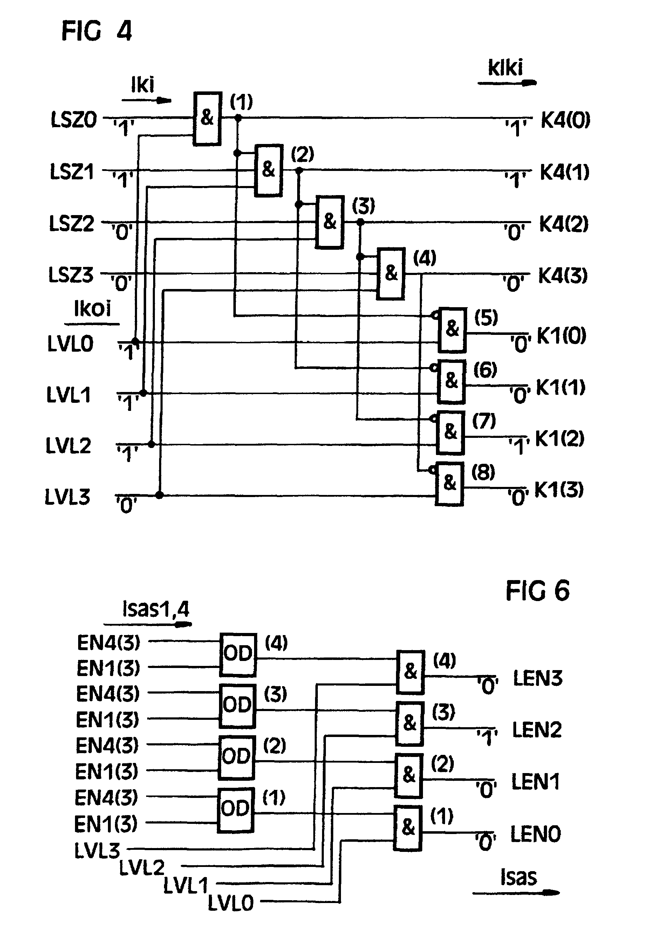

Figur 4 zeigt in einem Blockschaltbild die Kapazitätskorrekturstufe KKS. In dieser ist jede der logischen Kapazitätsleitungen LSZ0..3 mit einem ersten bis vierten UND-Gatter &(1-4) verbunden. Die vier logischen Vorhandenseinleitungen LV0..3 sind jeweils mit einem weiteren Eingang der ersten bis vierten UND-Gatter &(1..4) und jeweils einem Eingang von einem fünften bis achten UND-Gatter &(5-8) verbunden. Der Ausgang des ersten UND-Gatters &(1) ist auf einen weiteren Eingang des zweiten und einen weiteren invertierenden Eingang des fünften UND-Gatters &(2,5) geführt. Der Ausgang des zweiten UND-Gatters &(2) ist auf einen weiteren Eingang des dritten und auf einen weiteren invertierenden Eingang des sechsten UND-Gatters &(3,6) geschaltet. Analog hierzu ist der Ausgang des dritten UND-Gatters &(3) mit einem weiteren Eingang des vierten und mit einem weiteren invertierenden Eingang des siebten UND-Gatters &(4,7) verbunden. Der Ausgang des vierten UND-Gatters &(4) ist auf einen weiteren invertierenden Eingang des achten UND-Gatters &(8) geführt. Die vier Ausgänge K4(0..3) der vier UND-Gatter &(1..4) stellen Kapazitätsleitungen dar, an denen auf die große Speicherkapazität K4 bezogene, logische Kapazitätsinformationen klki angezeigt werden. Im weiteren werden diese Kapazitätsleitungen als K4-Leitungen bezeichnet. Die Ausgänge des fünften bis achten UND-Gatters &(5..8) repräsentieren auf die kleine Speicherkapazität K1 bezogene Kapazitätsleitungen K1(0..3), an denen auf die kleine Speicherkapazität bezogene logische Kapazitätsinformationen klki vorliegen. Üblicherweise repräsentieren die an den acht Ausgängen der acht UND-Gatter &(1..8) vorliegenden Informationen die korrigierte logische Kapazitätsinformaiton klki, wobei im Ausführungsbeispiel lediglich die auf den großen Speicherbereich bezogenen, logischen Kapazitätsinformationen klki benötigt werden. An den hierfür vorgesehenen K4-Leitungen K4(0..3) liegt bezogen auf das Ausführungsbeispiel eine binäre 1100-Bitkombination vor. In dieser Korrekturstufe KKS wird desweiteren eine Korrektur dahingehend bewirkt, daß hinsichtlich der Bestückungsbedingungen - Einsetzen von Speichermodulen SM beginnend mit dem adressen-höchstwertigen Einstetzbereich EB1..4 - eine fehlerhafte Bestückung korrigiert wird. Wird beispielsweise in den zweiten Einsetzbereich EB2 ein Speichermodul SM mit niedriger Speicherkapazität K1 eingesetzt, so werden für den dritten und vierten Einsetzbereich EB3,4 eingesetzte Speichermodule SM nur mit niedriger Speicherkapazität K1 berücksichtigt, obwohl eventuell Speichermodule SM mit großer Speicherkapazität K4 eingesetzt sind. Dies bedeutet eine Speicherkapazitätskorrektur von tatsächlicher zu logisch vorhandener Speicherkapazität K1,4.

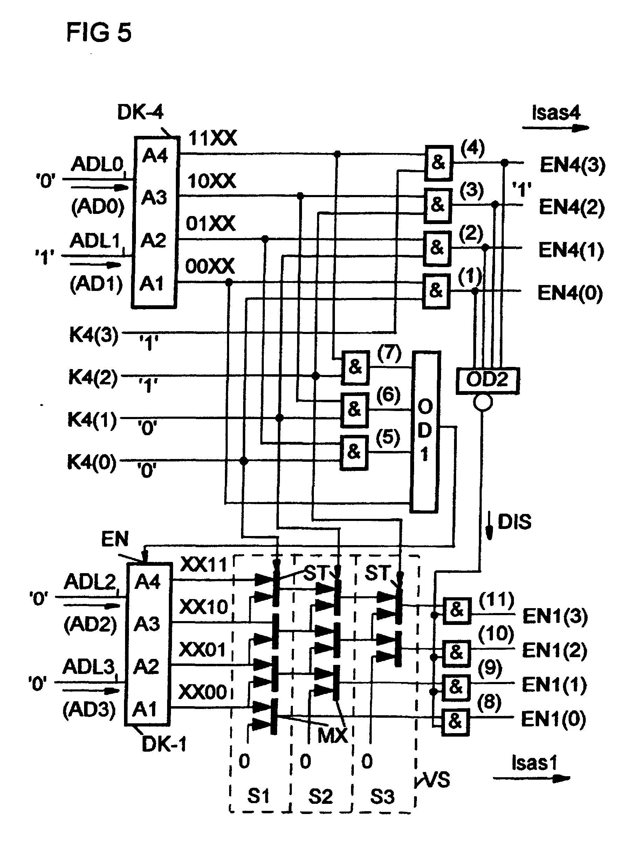

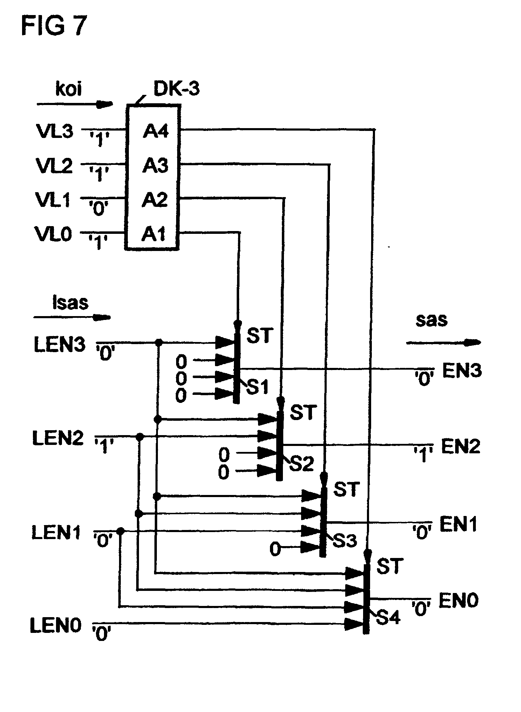

Die in Figur 5 und Figur 6 dargestellten Komponenten zeigen zusammen die Modulauswahleinheit MAE - siehe Figur 2. In Figur 5 sind die beiden niederwertigsten Adreßleitungen ADL2,3 der n+k höchstwertigen Adreßleitungen ADL0-3 an eine erste Dekodiereinheit DK-1, und die beiden höherwertigen Adreßleitungen ADL0,1 an eine zweite Dekodiereinheit DK-4 geführt. In diesen Dekodiereinheiten DK-1, DK-4, werden jeweils die beiden Adreßleitungen ADL0,1, ADL2,3 auf vier, jeweils einem Einsetzbereich EB1..4 zugeordnete Ausgangsleitungen A1..4 dekodiert. Dies bedeutet, daß entsprechend der an den Adreßleitungen ADL0,1, ADL2,3 vorliegenden binären Adreßinformationen AD0..3 - binäre 0- oder 1-Informationen - eine der Ausgangsleitungen A1..4 aktiv geschaltet ist, das heißt, eine binäre 1-Information aufweist.

Die Ausgangsleitungen A1..4 der zweiten Dekodiereinheit DK-4 sind jeweils mit einem Eingang von vier UND-Gattern &(1..4) verbunden. Die zweiten bis vierten Ausgangsleitungen A2..4 sind zusätzlich jeweils mit einem Eingang von fünften bis siebten UND-Gattern &(5..7) verbunden. Die vier Ausgangsleitungen A1..4 der ersten Dekodiereinheit DK-1 sind an eine erste Schiebestufe S1 geführt und in dieser jeweils auf einen Eingang von zwei Multiplexelementen MX geschaltet. Der noch freie Eingang des vierten Multiplexelementes MX ist an Nullpotential 0 gekoppelt. Der Ausgang des niederwertigsten Multiplexelementes MX ist mit einem Eingang eines achten UND-Gatters &(8) und die Ausgänge der drei weiteren Multiplexelemente MX sind mit jeweils einem Eingang von Multiplexelementen MX einer zweiten Schiebestufe S2 verbunden. Der Ausgang des niederwertigsten Multiplexelementes MX ist mit einem neunten UND-Gatter &(9) und die Ausgänge der beiden verbleibenden Multiplexelemente MX jeweils mit einem Eingang von zwei weiteren, eine dritte Schiebestufe S3 bildenden Multiplexelemente MX geführt. Der Ausgang des niedrigerwertigen Multiplexelementes MX ist mit dem Eingang eines zehnten UND-Gatters &(10) und der Ausgang des verbleibenden Multiplexelementes MX mit einem Eingang eines elften UND-Gatters &(11) verbunden.

Der weitere Eingang des vierten UND-Gatters &(4) ist mit der vierten K4-Leitung K4(3) und ein weiterer Eingang des dritten UND-Gatters &(3) ist auf den weiteren Eingang des siebten UND-Gatters &(7), die dritte K4-Leitung K4(2) und auf den Steuereingang ST der dritten Schiebestufe S3 geschaltet. Analog hierzu ist ein weiterer Eingang des zweiten UND-Gatters &(2) auf einen weiteren Eingang des sechsten UND-Gatters &(6), auf die zweite K4-Leitung K4(1) und auf den Steuereingang ST der zweiten Schiebestufe S2 geführt. Ein weiterer Eingang des ersten UND-Gatters &(1) weist eine Verbindung zu einem weiteren Eingang des fünften UND-Gatters &(5), der ersten K4-Leitung K4(0) und einem Steuereingang ST der ersten Schiebestufe S1 auf. Des weiteren sind die Ausgänge der fünften bis siebten UND-Gatter &(5..7) in einem ersten ODER-Gatter OD1 zusammengefaßt, dessen Ausgang mit einem Enable-Eingang EN der ersten Dekodiereinheit DK-1 verbunden ist. Die Ausgänge des ersten bis vierten UND-Gatter &(1..4) sind auf ein zweites ODER-Gatter OD2 gekoppelt, dessen invertierender Ausgang an jeweils einen weiteren Eingang des achten bis elften UND-Gatters &(8..11) geschaltet sind.

An den Ausgängen EN4(0..3) der vier UND-Gatter &(1..4) liegt eine binäre Information vor, die anzeigt, ob für den an den Adreßleitungen ADL0,1 aktuell auftretenden Adreßinformationen AD0,1 ein Speichermodul SM mit der Kapazität K4 an einem der vier Einsetzbereiche EB1..4 verfügbar ist. An den Ausgängen EN1(0..3) der achten bis elften UND-Glieder &(8..11) liegen ebenfalls logische Informationen darüber vor, ob bei der aktuell an den Adreßleitungen ADL2,3 vorliegenden Adreßinformationen AD2,3 ein Speichermodul SM mit kleiner Kapazität K1 an einem der vier Einsetzbereiche EB1..4 verfügbar ist.

Figur 6 zeigt vier ODER-Gatter OD(1..4), an deren einem Bingang der jeweilige Ausgang EN4(0..3) des ersten bis vierten UND-Gatters &(1..4) - siehe Figur 5 - und an deren weiteren Eingang jeweils ein Ausgang EN1(0..3) des achten bis elften UND-Gatters &(8..11) geführt ist. Die Ausgänge der vier ODER-Gatter OD1(1..4) sind jeweils auf einen Eingang von vier UND-Gattern &(1..4) geschaltet. An die weiteren Eingänge der vier UND-Gatter &(1..4) ist jeweils eine der vier logischen Vorhandenseinleitungen LVL0..3 geführt. An den Ausgängen LEN0..3 der vier UND-Gatter &(1..4) liegt nun das logische Speicheransteuersignal lsas vor. Dieses logische Speicheransteuersignal lsas zeigt in binärer Form an, welcher Einsetzbereich EB1..4 logisch angesteuert werden soll.

Die Umsetzung des logischen Speicheransteuersignals lsas in das physikalische Speicheransteuersignal sas ist in Figur 7 dargestellt. Hierzu werden die vier Vorhandenseinleitungen VL0..3 - siehe Figur 3 - an eine dritte Dekodiereinheit DK-3 geführt. Die vier Ausgänge A1..A4 der dritten Dekodiereinheit DK-3 sind jeweils mit einem Steuereingang ST von vier Schiebestufen S1..4 verbunden.

Die Ausgänge LEN0..3 der vier UND-Gatter &(1..4) - siehe Figur 6 - sind wie folgt auf die vier Schiebestufen S1..4 geschaltet:
- Ausgang LEN0 auf einen Eingang der vierten Schiebestufe S4,
- Ausgang LEN1 auf einen Eingang der vierten und dritten Schiebestufe S3, S4,
- der Ausgang LEN2 auf einen Eingang der zweiten, dritten und vierten Schiebestufe S2..4 und
- LEN3 auf jeweils einen Eingang aller vier Schiebestufen S1..4.

Die verbleibenden der jeweils vier Eingänge der vier Schiebestufen S1..4 sind mit 0-Potenlial beschaltet.

Die Schiebestufen S1..4 sind in gleicher Weise wie in Figur 3 oder 5 dargestellt, realisiert. In der dritten Dekodiereinheit DK-3 ist eine nicht dargestellte Dekodiertabelle hinterlegt, durch die die Schiebestufen S1..4 derart angesteuert werden, daß an den vier Ausgängen EN0..3 der vier Schiebestufen S1..4 das Speicheransteuersignal sas in binärer Form vorliegt, wobei jeweils ein Ausgang EN0..3 separat mit einem Einsetzbereich EB1..4 verbunden ist. Dies bedeutet, daß eine der vier Ausgänge EN0..3 eine binäre 1-Information aufweist, durch die das in den betreffenden Einsetzbereich EB1..4 eingesetzte Speichermodul SM angesteuert, das heißt, freigegeben wird. Zusammen mit den Adreßinformationen AD2-m der übrigen Adreßleitungen ADL2-m, wird der Subspeicherbereich in dem freigegebenen Speichermodul SM angesteuert und vom Mikroprozessor MP übermittelte Daten gespeichert oder Daten gelesen und an den Mikroprozessor MP übermittelt. Bezogen auf das Ausführungsbeispiel wird das im dritten Einsetzbereich EB3 eingesetzte Speichermodul SM freigegeben, das heißt, adressiert.

## Patentansprüche

1. Verfahren zum Konvertieren von durch eine prozessorgesteuerte Einrichtung gebildeten Speicherbereichsadressen (AD0..m) in auf eine Struktur und Speicherkapazität eines Speichers (SP) abgestimmte Speicheransteuersignale (sas) anhand von Konvertierungsinformationen,
- bei dem der Speicher (SP) durch einheitliche und/oder unterschiedliche Speicherkapazitäten (K1,4) aufweisende Speichermodule (SM) gebildet ist, die jeweils in einen physikalischen Einsetzbereich (EB1..4) des Speichers (SP) eingesetzt sind, wobei der Speicher (SP) zumindest zwei Einsetzbereiche (EB1..4) umfaßt,
- bei dem jeweils jedem eingesetzten Speichermodul (SM) zugeordnete und die Speicherkapazität (K1,4) der jeweiligen eingesetzten Speichermodule (SM) anzeigende Kapazitätsinformationen (ki) und das Vorhandensein von eingesetzten Speichermodulen (SM) anzeigende Konfigurationsinformationen (koi) aller Einsetzbereiche (EB1..4) erfaßt werden, und
- bei dem aus den erfaßten Kapazitätsinformationen (ki) und den Konfigurationsinformationen (koi) in Abhängigkeit von den erfaßten Konfigurationsinformationen (koi) den Adreßraum anzeigende logische Kapazitätsinformationen (lki) und die virtuelle Konfiguration des Speichers (SP) anzeigende, logische Konfigurationsinformationen (lkoi) abgeleitet werden,
- wobei die logischen Kapazitäts- zusammen mit den Konfigurationsinformationen (lki,lkoi) die Konvertierungsinformationen repräsentieren, anhand derer die Speicheransteuersignale (sas) abgeleitet werden.

2. Verfahren nach Anspruch 1, **dadurch gekennzeichnet,**
- **daß** bei einer m-stelligen, binären Speicherbereichsadresse (AD0..m) n höchstwertige Stellen für die Konfiguration von 2ⁿ Einsetzbereichen (EB1..4) vorgesehen werden,
- wobei in jeden der 2ⁿ Einsetzbereiche (EB1..4) Speichermodule (SM) mit einer Gesamtspeicherkapazität von 2^{m-n} adressierbaren Speicherbereichen einsetzbar sind, und
- **daß** für jeden Einsetzbereich (EB1..4) eine Kapazitäts- und eine Konfigurationsinformation (ki,koi) erfaßt wird.

3. Verfahren nach Anspruch 2, **dadurch gekennzeichnet,**
- **daß** Speichermodule (SM) mit zwei unterschiedlichen Speicherkapazitäten (K1,4) einsetzbar sind, wobei die größere Speicherkapazität (K4) 2^{m-n} adressierbare Speicherbereiche und die kleinere Speicherkapazität (K1) 2^{m-n-k} (k,m,n = 1,2..) adressierbare Speicherbereichen umfaßt,
- **daß** die Speichermodule (SM) mit der größeren Speicherkapazität (K4), beginnend mit dem Einsetzbereich (EB1..4) mit den kleinsten, zugeordneten Speicherbereichsadressen (AD0..3), sukzessive in die Einsetzbereiche (EB1..4) mit den nächst höherwertigeren, zugeordneten Speicherbereichsadressen (AD0..3) eingesetzt werden,
- **daß** die erfaßte Kapazitätsinformationen (ki) durch eine die kleine oder große Speicherkapazität (K1,4) anzeigende, binäre Kapazitätsinformation
- und die Konfigurationsinformation (koi) durch eine das Vorhandensein oder Nichtvorhandensein eines eingesetzten Speichermoduls (SM) anzeigende, binäre Konfigurationsinformation repräsentiert ist.

4. Verfahren nach Anspruch 3, **dadurch gekennzeichnet,**
- **daß** nach dem Einsetzen von Speichermodulen (SM) in die Einsetzbereiche (EB1..4) die logischen Kapazitätsinformationen (lki) derart gebildet werden,
- **daß** ausgehend von den ein eingesetztes Speichermodul (SM) aufweisenden Einsetzbereichen (EB1..4) mit den zugeordneten niedrigsten Speicherbereichsadressen (AD0..3) beim Vorliegen einer ein eingesetztes Speichermodul (SM) anzeigenden Konfigurationsinformation (koi) die jeweils erfaßten, binären Kapazitätsinformationen (ki) binär addiert werden und eine Dualzahl darstellen, die den nutzbaren Adreßraum des Speichers (SP) durch die duale Summe der großen Speicherkapazitäten (K4) angibt.

5. Verfahren nach Anspruch 4, **dadurch gekennzeichnet,**
- **daß** bei Einsetzbereichen (EB1..4) ohne eingesetzte Speichermodule (SM) die logische Kapazitätsinformation (lki) und die logische Konfigurationsinformation (lkoi) in Abhängigkeit vom Vorhandensein von eingesetzten Speichermodulen (SM) durch Verschieben der die Speicherkapazität (K1,4) von Speichermodulen (SM) anzeigenden, binären Kapazitäts- und Konfigurationsinformationen (ki,koi) in Richtung niederwertige Stellen der mehrstelligen, binären Kapazitäts- und Konfigurationsinformationen (ki,koi) erfolgt.

6. Anordnung zum Konvertieren von durch eine prozessorgesteuerte Einrichtung gebildeten Speicherbereichsadressen (AD0..m) in auf eine Struktur und Speicherkapazität eines Speichers (SP) abgestimmte Speicheransteuersignale (sas) anhand von Konvertierungsinformationen,
- bei der der Speicher (SP) durch einheitliche und/oder unterschiedliche Speicherkapazitäten (K1,4) aufweisende Speichermodule (SM) gebildet ist, die jeweils in einen physikalischen Einsetzbereich (EB1..4) des Speichers (SP) eingesetzt sind, wobei der Speicher (SP) zumindest zwei Einsetzbereiche (EB1..4) umfaßt,
- bei der Kapazitäts- und Vorhandenseinleitungen (SZ,VL), über die jeweils jedem eingesetzten Speichermodul (SM) zugeordnete und die Speicherkapazität (K1,4) der jeweiligen eingesetzten Speichermodule (SM) anzeigende Kapazitätsinformationen (ki) und das Vorhandensein von eingesetzten Speichermodulen (SM) anzeigende Konfigurationsinformationen (koi) aller Einsetzbereiche (EB1..4) übermittelt werden, an eine Verschiebestufe (VS1) angeschlossen sind, und
- bei der die Verschiebestufe (VS1) derart ausgestaltet ist, daß aus den erfaßten Kapazitätsinformationen (ki) und den Konfigurationsinformationen (koi) in Abhängigkeit von den erfaßten Konfigurationsinformationen (koi) den Adreßraum anzeigende logische Kapazitätsinformationen (lki) und die virtuelle Konfiguration des Speichers (SP) anzeigende, logische Konfigurationsinformationen (lkoi) abgeleitet werden,
- wobei die die logischen Kapazitäts- zusammen mit den Konfigurationsinformationen (lki,lkoi) repräsentierenden Konvertierungsinformationen an jeweils einem Ausgang (A1,2) der Verschiebestufe (VS1) vorliegen, und wobei
- eine Konvertierungseinrichtung (KVE) zum Ableiten der Speicheransteuersignale (sas) anhand der Konvertierungsinformationen vorgesehen ist.

7. Verfahren nach Anspruch 1,
**dadurch gekennzeichnet,**
- **daß** aus n, die Konfiguration des Speichers betreffenden Stellen einer aktuell vorliegenden m-stelligen Speicherbereichsadresse (AD0..m) mit Hilfe der logischen Kapazitätsinformationen (lkio) und der logischen Konfigurationsinformationen (lkoi) einsetzbereichsbezogen ein logisches Speicheransteuersignal (lsas) abgeleitet wird, und
- **daß** mit Hilfe der Konfigurationsinformationen (koi) aus dem einsetzbereichsbezogenen logischen Speicheransteuersignal (lsas) für den betroffenen Einsetzbereich ein physikalisches Speicheransteuersignal (sas) abgeleitet wird.

8. Verfahren nach Anspruch 7, **dadurch gekennzeichnet,**
- **daß** in jeden von 2ⁿ Einsetzbereichen 1..4) Speichermodule (SM) mit einer Gesamtspeicherkapazität von 2^{m-n} adressierbaren Speicherbereichen einsetzbar sind,
- **daß** aus der n-stelligen Speicherbereichsadresse (AD0..3), mit Hilfe von aus den logischen Kapazitäts- und Konfigurationsinformationen (lki,lkoi) abgeleiteten speicherkapazitatsindividuellen Kapazitätsinformationen (klki) für jede vorgesehene Speicherkapazität (K1,4) logische Speicheransteuersignale (lsas1,lsas4) abgeleitet werden sowie anschließend mit Hilfe der logischen Konfigurationsinformationen (lkoi) ein logisches Speicheransteuersignal (lsas) gebildet wird, und
- **daß** aus dem logischen Speicheransteuersignal (lsas) mit Hilfe der Konfigurationsinformationen ((koi)) für den ermittelten Einsetzbereich (EB1..4) ein physikalisches Speicheransteuersignal (sas) gebildet und an das Speichermodul (SM) des betroffenen Einsetzbereichs (EB1..4) weitergeleitet wird.

9. Verfahren nach Anspruch 8, **dadurch gekennzeichnet,**
**daß** aus den logischen Kapazitäts- und Konfigurationsinformationen (lki,lkoi) für jede mögliche Speicherkapazität (K1,4) jeweils deren logische Gesamtspeicherkapazität anzeigende, logische speicherkapazitätsindividuelle Kapazitätsinformationen (klki) gebildet werden.

10. Verfahren nach Anspruch 8 oder 9, **dadurch gekennzeichnet, daß** aus den aktuell vorliegenden Adreßinformationen der m-stelligen Speicherbereichsadresse (AD0..m) für jede vorgesehene Speicherkapazität (K1,4) abgeleitete logische Speicheransteuersignale (lsas1,4) auf die logischen Konfigurationsinformationen (lkoi) abgebildet werden, wodurch ein logisches Speicheransteuersignal (lsas) gebildet wird.

11. Verfahren nach einem der Ansprüche 8 bis 10, **dadurch gekennzeichnet,**
**daß** die Konfigurationsinformationen (koi) dekodiert das logische Speicheransteuersignal (lsas) auf den betroffenen Einsetzbereich (EB1..4) steuern, wobei das gesteuerte logische Speicheransteuersignal (lsas) das physikalische Speicheransteuersignal (sas) repräsentiert.

12. Anordnung nach Anspruch 6,
**dadurch gekennzeichnet,**
- **daß** die die virtuelle Speicherkapazität anzeigenden, logischen Kapazitätsinformationen (lki) und die logischen Konfigurationsinformationen (lkoi) übermittelnde Kapazitätsund Konfigurationsleitungen (LSZ,LVL) an die Konvertierungseinrichtung (KVE) angeschlossen sind,
- **daß** die Konvertierungseinrichtung (KVE) derart ausgestaltet ist, daß aus n, die Konfiguration des Speichers betreffenden Stellen einer aktuell vorliegenden m-stelligen Speicherbereichsadresse (AD0..m) mit Hilfe der logischen Kapazitätsinformationen (lki) und der logischen Konfigurationsinformationen (lkoi) ein einsetzbereichsbezogenes logisches Speicheransteuersignal (lsas) abgeleitet wird,
- **daß** mit Hilfe der Konfigurationsinformationen (koi) aus dem einsetzbereichsbezogenen logischen Speicheransteuersignal (lsas) für den betroffenen Einsetzbereich (EB1..4) ein physikalisches Speicheransteuersignal (sas) abgeleitet wird, und
- **daß** an jeden Einsetzbereich (EB1..4) ein das Speicheransteuersignal (sas) übermittelnder Ausgang (EN0..3 der Konvertierungseinrichtung (KVE) geschaltet ist.

## Claims

1. Method for converting memory area addresses (AD0..m) formed by a processor-controlled device into memory selection signals (sas) which are coordinated with a structure and storage capacity of a memory (SP), on the basis of conversion information items,
- in which the memory (SP) is formed by memory modules (SM) which have uniform and/or different storage capacities (K1,4) and are each inserted into a physical insertion region (EB1..4) of the memory (SP), the memory (SP) comprising at least two insertion regions (EP1..4),
- in which capacity information items (ki), assigned to each inserted memory module (SM) and indicating the storage capacity (K1,4) of the respective inserted memory modules (SM), and configuration information items (koi), indicating the presence of inserted memory modules (SM), of all the insertion regions (EB1..4) are acquired in each case, and
- in which logical capacity information items (lki) indicating the address space as a function of the acquired configuration information items (koi) and logical configuration information items (lkoi) indicating the virtual configuration of the memory (SP) are derived from the acquired capacity information items (ki) and the configuration information items (koi),
- the logical capacity together with the configuration information items (lki,lkoi) representing the conversion information items on the basis of which the memory selection signals (SAS) are derived.

2. Method according to Claim 1, **characterized**
- **in that**, in the case of an m-digit, binary memory area address (AD0..m), n most significant digits are provided for the configuration of 2ⁿ insertion regions (EB1..4),
- it being possible to insert memory modules (SM) having a total storage capacity of 2^{m-n} addressable memory areas into each of the 2ⁿ insertion regions (EB1..4), and
- **in that** one capacity and one configuration information item (ki,koi) is acquired for each insertion region (EB1..4).

3. Method according to Claim 2, **characterized**
- **in that** it is possible to insert memory modules (SM) having two different storage capacities (K1,4), the larger storage capacity (K4) comprising 2^{m-n} addressable memory areas and the smaller storage capacity (k1) comprising 2^{m-n-k} (k,m,n = 1,2..) addressable memory areas,
- **in that** the memory modules (SM) having the larger storage capacity (K4) are, beginning with the insertion region (EB1..4) with the smallest assigned memory area addresses (AD0..3), progressively inserted into the insertion regions (EB1..4) with the next more significant assigned memory area addresses (AD0..3),
- **in that** the acquired capacity information items (ki) are represented by a binary capacity information item indicating the small or large storage capacity (K1,4),
- and the configuration information item (koi) is represented by a binary configuration information item indicating the presence or absence of an inserted memory module (SM).

4. Method according to Claim 3, **characterized**
- **in that** following the insertion of memory modules (SM) into the insertion regions (EB1..4), the logical capacity information items (lki) are formed in such a way
- that, starting from the insertion regions (EB1..4) having an inserted memory module (SM) and with the assigned lowest memory area addresses (AD0..3), given the presence of a configuration information item (koi) indicating an inserted memory module (SM), the respectively acquired binary capacity information items (ki) are subjected to binary addition and represent a binary number which indicates the usable address space of the memory (SP) by the binary sum of the large storage capacities (K4).

5. Method according to Claim 4, **characterized**
- **in that**, in the case of insertion regions (EB1..4) without any inserted memory modules (SM), the logical capacity information (lki) and the logical configuration information (lkoi) as a function of the presence of inserted memory modules (SM) is effected [sic] by shifting the binary capacity and configuration information items (ki,koi), indicating the storage capacity (K1,4) of memory modules (SM), in the direction of less significant digits of the multi-digit binary capacity and configuration information items (ki,koi).

6. Arrangement for converting memory area addresses (AD0..m) formed by a processor-controlled device into memory selection signals (sas) which are coordinated with a structure and storage capacity of a memory (SP), on the basis of conversion information items,
- in which the memory (SP) is formed by memory modules (SM) which have uniform and/or different storage capacities (K1,4) and are each inserted into a physical insertion region (EB1..4) of the memory (SP), the memory (SP) comprising at least two insertion regions (EB1..4),
- in which capacity and presence lines (SZ,VL), via which capacity information items (ki), assigned to each inserted memory module (SM) and indicating the storage capacity (K1,4) of the respective inserted memory modules (SM), and configuration information items (koi), indicating the presence of inserted memory modules (SM), of all the insertion regions (EB1..4) are communicated in each case, are connected to a shifting stage (VS1), and
- in which the shifting stage (VS1) is configured in such a way that logical capacity information items (lki) indicating the address space as a function of the acquired configuration information items (koi) and logical configuration information items (lkoi) indicating the virtual configuration of the memory (SP) are derived from the acquired capacity information items (ki) and the configuration information items (koi),
- the conversion information items representing the logical capacity together with the configuration information items (lki,lkoi) being present at in each case one output (A1,2) of the shifting stage (VS1), and
- provision being made of a conversion device (KVE) for deriving the memory selection signals (sas) on the basis of the conversion information items.

7. Method according to claim 1 **characterized**
- **in that** a logical memory selection signal (lsas) is derived in an insertation region-related manner from n digits, referring to the configuration of the memory, of a currently present m-digit memory area address (AD0..m) with the aid of the logical capacity information items (lkio) and the logical configuration information items (lkoi), and
- **in that**, with the aid of the configuration information items (koi), a physical memory selection signal (sas) is derived from the insertation region-related logical memory selection signal (lsas) for the relevant insertation region.

8. Method according to Claim 7, **characterized**
- **in that** it is possible to insert memory modules (SM) having a total storage capacity of 2^{m-n} addressable memory areas into each of 2ⁿ insertion regions 1..4) [sic],
- **in that** logical memory selection signals (lsas1,lsas4) are derived from the n-digit memory area address (AD0..3) with the aid of storage capacity-specific capacity information items (klki), derived from the logical capacity and configuration items (lki,lkoi), for each storage capacity (K1,4) provided, and also a logical memory selection signal (lsas) is subsequently formed with the aid of the logical configuration information items (lkoi), and
- **in that** a physical memory selection signal (sas) is formed from the logical memory selection signal (lsas), with the aid of the configuration information items ((koi)) for the insertion region (EB1..4) determined and is forwarded to the memory module (SM) of the relevant insertion region (EB1..4).

9. Method according to Claim 8, **characterized**
**in that**, from the logical capacity and configuration information items (lki,lkoi) for every possible storage capacity (K1,4), logical capacity information items (klki) specific to the storage capacity and respectively indicating the logical total storage capacity thereof are formed.

10. Method according to Claim 8 or 9, **characterized**
**in that** logical memory selection signals (lsas1,4) derived from the currently present address information items of the m-digit memory area address (AD0..m) for every storage capacity (K1,4) provided are mapped onto the logical configuration information items (lkoi), thereby forming a logical memory selection signal (lsas).

11. Method according to one of Claims 8 to 10,
**characterized**
**in that** the configuration information items (koi) control, after having been decoded, the logical memory selection signal (lsas) on the relevant insertion region (EB1..4), the controlled logical memory selection signal (lsas) representing the physical memory selection signal (sas).

12. Arrangement according to Claim 6, **characterized**
- **in that** capacity and configuration lines (LSZ,LVL) communicating the logical capacity information items (lki), which indicate the virtual storage capacity, and the logical configuration information items (lkoi), are connected to the conversion device (KVE), and
- **in that** the conversion device (KVE) is configured in such a way that an insertion region-related logical memory selection (lsas) is derived from n digits, referring to the configuration of the memory, of a currently present m-digit memory area address (AD0..m) with the aid of the logical capacity information items (lki) and the logical configuration information items (lkoi),
- **in that**, with the aid of the configuration information items (koi), a physical memory selection signal (sas) is derived from the insertion region-related logical memory selection signal (lsas) for the relevant insertion region (EB1..4), and
- **in that** an output (EN0..3), which communicates the memory selection signal (sas), of the conversion device (KVE) is connected to each insertion region (EB1..4).

## Revendications

1. Procédé destiné à la conversion, à l'aide d'informations de conversion, d'adresses de zones de mémoire (AD0..m), formées par un dispositif commandé par processeur, en signaux de commande des mémoires (sas) adaptés à la structure et à la capacité d'une mémoire (SP),
- dans lequel la mémoire (SP) est formée par des modules de mémoire (SM), ayant des capacités de mémoire (K1, 4) uniformes et/ou différentes les unes des autres, lesquels sont insérés chacun dans une zone physique d'insertion (EB1..4) de la mémoire (SP), la mémoire (SP) comprenant, au moins, deux zones d'insertion (EB1..4),
- dans lequel on détecte des informations de capacité (ki), correspondant à chaque module de mémoire (SM) inséré et indiquant la capacité de mémoire (K1, 4) de chaque module de mémoire (SM) inséré, et des informations de configuration (koi) de toutes les zones d'insertion (EB1..4), indiquant la présence de modules de mémoire (SM) insérés, et
- dans lequel, à partir des informations de capacité (ki) et des informations de configuration (koi) détectées, on déduit, en fonction des informations de configuration (koi) détectées, des informations logiques de capacité (Iki), indiquant l'espace adresse virtuel, et des informations logiques de configuration (Ikoi), indiquant la configuration virtuelle de la mémoire (SP),
- les informations logiques de capacité représentant, en commun avec les informations de configuration (Iki, Ikoi), les informations de conversion, à l'aide desquelles les signaux de commande des mémoires (sas) sont déduits.

2. Procédé selon la revendication 1 **caractérisé par le fait**
- **que**, dans le cas d'une adresse binaire (ADO..m) de zone de mémoire à m positions, il est prévu n positions de la valence la plus élevée pour la configuration de 2ⁿ zones d'insertion (EB1..4),
- des modules de mémoire (SM), ayant une capacité totale de mémoire de 2^{m-n} zones de mémoire adressables, pouvant être insérés dans chacune des 2ⁿ zones d'insertion (EB1..4), et
- **que**, pour chaque zone d'insertion (EB1..4), une information de capacité et une information de configuration (ki, koi) sont détectées.

3. Procédé selon la revendication 2 **caractérisé par le fait**
- **qu'**il est possible d'insérer des modules de mémoire (SM) de deux capacités différentes (K1, 4), la capacité de mémoire la plus grande (K4) comprenant 2^{m-} "zones de mémoire adressables et la capacité de mémoire la plus petite (K1) comprenant 2^{m-n-k} (avec k, m, n = 1, 2, ..) zones de mémoire adressables,
- **que** les modules de mémoire (SM), ayant la capacité de mémoire la plus grande (K4), sont insérés, en commençant par la zone d'insertion (EB1..4) à laquelle sont affectées les adresses de zones de mémoire (AD0..3) les plus petites, successivement dans les zones de mémoire (EB1..4) auxquelles sont affectées les adresses de zones de mémoire (AD0..3) ayant la valence immédiatement supérieure,
- **que** l'information de capacité (ki) détectée est représentée par une information binaire de capacité indiquant la petite ou la grande capacité de mémoire (K1, 4)
- et l'information de configuration (koi) est représentée par une information binaire de configuration indiquant la présence d'un module de mémoire (SM) inséré ou son absence.

4. Procédé selon la revendication 3 **caractérisé par le fait**
- **que**, après l'insertion de modules de mémoire (SM) dans les zones d'insertion (EB1..4), les informations logiques de capacité (Iki) sont formées de telle sorte
- **que**, en partant des zones d'insertion (EB1..4), comportant un module de mémoire (SM) inséré, auxquelles sont affectées les adresses de zones de mémoire (AD0..3) les plus basses, lorsqu'on se trouve en présence d'une information de configuration (koi) indiquant qu'un module de mémoire est inséré, les informations binaires de capacité (ki), détectées dans chaque cas, sont additionnées d'une façon binaire et représentent un nombre binaire qui indique l'espace adresse virtuel utilisable de la mémoire (SP) grâce à la somme binaire des grandes capacités de mémoire (K4).

5. Procédé selon la revendication 4 **caractérisé par le fait**
- **que**, dans le cas de zones d'insertion (EB1..4), dans lesquelles aucun module de mémoire (SM) n'est inséré, l'information logique de capacité (Iki) et l'information logique de configuration (Ikoi) sont produites, en fonction de la présence de modules de mémoire (SM) insérés, par translation des informations binaires de capacité et de configuration (ki, koi), indiquant la capacité de mémoire (K1, 4) de modules de mémoire (SM), dans la direction de positions de moindre valence des informations binaires de capacité et de configuration (ki, koi) à plusieurs positions.

6. Dispositif destiné à la conversion, à l'aide d'informations de conversion, d'adresses de zones de mémoire (AD0..m), formées par un dispositif commandé par processeur, en signaux de commande des mémoires (sas) adaptés à la structure et à la capacité d'une mémoire (SP),
- dans lequel la mémoire (SP) est formée par des modules de mémoire (SM), ayant des capacités de mémoire (K1, 4) uniformes et/ou différentes les unes des autres, lesquels sont insérés chacun dans une zone physique d'insertion (EB1..4) de la mémoire (SP), la mémoire (SP) comprenant, au moins, deux zones d'insertion (EB1..4),
- dans lequel des conducteurs de capacité et des conducteurs de présence (SZ, VL), par l'intermédiaire desquels sont transmises des informations de configuration (koi) de toutes les zones d'insertion (EB1..4) correspondant, dans chaque cas, à chaque module de mémoire (SM) inséré et indiquant la capacité de mémoire (K1, 4) de chaque module de mémoire (SM) inséré, et, indiquant la présence de modules de mémoire (SM) insérés, sont raccordés à un étage de translation (VS1) et
- dans lequel l'étage de translation (VS1) est conçu de telle sorte que, à partir des informations de capacité (ki) et des informations de configuration (koi) détectées, on déduit, en fonction des informations de configuration (koi) détectées, des informations logiques de capacité (lki), indiquant l'espace adresse virtuel, et des informations logiques de configuration (lkoi), indiquant la configuration virtuelle de la mémoire (SP),
- les informations de conversion représentant les informations logiques de capacité, en commun avec les informations de configuration (lki, lkoi), apparaissant, dans chaque cas, à une sortie (A1, 2) de l'étage de translation (VS1) et
- un dispositif de conversion (KVE) étant prévu pour déduire les signaux de commande des mémoires (sas) à l'aide des informations de conversion.

7. Procédé selon la revendication 1
**caractérisé par le fait**
- **que**, à partir de n positions, concernant la configuration de la mémoire, d'une adresse de zone de mémoire (AD0..m) à m positions, actuellement présente, on déduit, à l'aide des informations logiques de capacité (Ikio) et des informations logiques de configuration (Ikoi), un signal logique de commande des mémoires (Isas) et
- **que**, à l'aide des informations de configuration (koi), à partir du signal logique de commande des mémoires (Isas) relatif à la zone d'insertion concernée, un signal physique de commande des mémoires (sas) est déduit pour la zone d'insertion concernée.

8. Procédé selon la revendication 7 **caractérisé par le fait**
- **que**, dans chacune des 2ⁿ zones d'insertion (EB1..4), il est possible d'insérer des modules de mémoire (SM) avec une capacité totale de mémoire de 2^{m-n} zones de mémoire adressables,
- **que**, à partir de l'adresse de zone de mémoire à n positions (AD0..3), des signaux logiques de commande des mémoires (lsas1, Isas4) sont déduits pour chaque capacité de mémoire prévue (K1, 4), à l'aide d'informations de capacité (klki), spécifiques à la capacité de mémoire, déduites des informations logiques de capacité et des informations logiques de configuration (lki, lkoi), ainsi que, ensuite, un signal logique de commande des mémoires (Isas) est formé à l'aide des informations logiques de configuration (lkoi) et
- **que**, à partir du signal logique de commande des mémoires (lsas), un signal physique de commande des mémoires (sas) est formé, à l'aide des informations de configuration ((koi)) pour la zone d'insertion déterminée (EB1..4), et retransmis au module de mémoire (SM) de la zone d'insertion (EB1..4) concernée.

9. Procédé selon la revendication 8 **caractérisé par le fait**
**que**, à partir des informations logiques de capacité et des informations logiques de configuration (Iki, Ikoi) pour chaque capacité de mémoire possible (K1, 4), dans chaque cas, des informations logiques de capacité (klki), spécifiques à la capacité de mémoire et indiquant sa capacité logique totale de mémoire, sont formées.

10. Procédé selon la revendication 8 ou 9 **caractérisé par le fait**
**que**, à partir des informations d'adresses, actuellement présentes, de l'adresse de zone de mémoire à m positions (AD0..m), des signaux logiques de commande des mémoires (lsas1, 4), déduits pour chaque capacité de mémoire prévue (K1, 4), sont reproduits sur les informations logiques de configuration (Ikoi), ce qui forme un signal logique de commande des mémoires (Isas).

11. Procédé selon l'une des revendications 8 à 10 **caractérisé par le fait**
**que** les informations de configuration (koi) contrôlent, d'une façon décodée, le signal logique de commande des mémoires (Isas) sur la zone d'insertion (EB1..4) concernée, le signal logique de commande des mémoires (Isas) contrôlé représentant le signal physique de commande des mémoires (sas).

12. Dispositif selon la revendication 6
**caractérisé par le fait**
- **que** les conducteurs de capacité et les conducteurs de configuration (LSZ, LVL), transportant les informations logiques de capacité (lki) qui indiquent la capacité virtuelle de mémoire, et les informations logiques de configuration (lkoi), sont raccordées au dispositif de conversion (KVE),
- **que** le dispositif de conversion (KVE) est conçu de telle sorte que, à partir de n positions, concernant la configuration de la mémoire, d'une adresse de zone de mémoire (AD0..m) à m positions, actuellement présente, on déduit, à l'aide des informations logiques de capacité (Iki) et des informations logiques de configuration (Ikoi), un signal logique de commande des mémoires (Isas) relatif à la zone d'insertion,
- **que**, à l'aide des informations de configuration (koi), on déduit, à partir du signal logique de commande des mémoires (Isas) spécifique à la zone d'insertion, un signal physique de commande des mémoires (sas) pour la zone d'insertion (EB1..4) concernée et
- **que**, sur chaque zone d'insertion (EB1..4), est connectée une sortie (EN0..3) du dispositif de conversion (KVE), laquelle transmet le signal de commande des mémoires (sas).
